(19) Europäisches Patentamt

European Patent Office

Office européen des brevets

(11) **EP 1 043 869 A2**

## (12) EUROPEAN PATENT APPLICATION

(43) Date of publication:
**11.10.2000 Bulletin 2000/41**

(51) Int. Cl.[7]: **H04L 12/56**, H04L 12/46,
H04L 29/06

(21) Application number: **00301162.4**

(22) Date of filing: **15.02.2000**

(84) Designated Contracting States:
**AT BE CH CY DE DK ES FI FR GB GR IE IT LI LU
MC NL PT SE**
Designated Extension States:
**AL LT LV MK RO SI**

(30) Priority: **26.02.1999 US 259900**

(71) Applicant:
**LUCENT TECHNOLOGIES INC.
Murray Hill, New Jersey 07974-0636 (US)**

(72) Inventor: **Chuah, Mooi Choo
Eatontown, New Jersey 07724 (US)**

(74) Representative:
**Buckley, Christopher Simon Thirsk
Lucent Technologies Inc.,
5 Mornington Road
Woodford Green, Essex IG8 0TU (GB)**

### (54) Providing quality of service in layer two tunneling protocol networks

(57) New Attribute Value Pairs (AVP)s are defined for use in Layer 2 Tunneling Protocol (L2TP) control messages to support negotiating tunnels having different quality of service (QoS) requirements. In addition, illustrative admission control procedures are described for accepting or rejecting incoming/outgoing calls with different quality of service requirements using the negotiated tunnels.

EP 1 043 869 A2

**Description**

**Cross-Reference to Related Applications**

Related subject matter is disclosed in the co-pending, commonly assigned, U.S. Patent application of Chuah, entitled "An RSVP-Based Tunnel Protocol Providing Guaranteed Services," serial No. 09/259,170, filed on even date herewith.

**Field of the Invention**

This invention relates generally to communications and, more particularly, to packet communications systems.

**Background of the Invention**

In the past, all data traffic using the Internet was treated equally and transported using a "best effort" mechanism. However, over time, the need to support real-time applications over the Internet (e.g., audio/video conferencing tools, gaming applications, etc.) necessitated some form of differentiated services offering. As such, those in the art are defining new protocols for providing quality of service (QoS) to Internet users. For example, the article "An Architecture for Differentiated Services," RFC2475, December 1998 by S. Blake, et al., defines six bits within the Type of Service (TOS) byte in the Internet Protocol (IP) header for conveying a code point which represents a certain QoS. Similarly, the article "An Expedited Forwarding PHB", draft-ietf-diffserv-phb-ef-01 .txt, Nov 1998, by V. Jacobson, et al, describes one specific code point that allows users to subscribe to different configured rates just like the Constant Bit Rate (CBR) service in ATM. And, the article "Assured Forwarding PHB Group", draft-ietf-diffserv-af-03 .txt, Dec 1998, by J. Heinanen, et al. describes other types of services that are similar to Real Time/Non Real-Time Variable Bit Rate (VBR) services in ATM.

One use of the Internet as a communications vehicle is as an enhanced data backbone for coupling together workgroups to provide what is referred to as a "virtual private network" (VPN). One application of a VPN is in a corporate environment such that employees, e.g., at home, can remotely access, via the Internet, corporate data networks. A VPN provides security, and authentication, for a remote user to join a closed user group notwithstanding the use of public facilities. In effect, the use of a VPN provides a WAN-like vehicle to the corporation and its employees. (Although the corporate network could also provide direct remote access, e.g., a user dials directly into the corporate network, there are economic advantages to the use of a VPN.)

To provide a VPN, tunneling protocols are used such as the "Point-to-Point Tunneling protocol" (PPTP) and the "Layer 2 Forwarding" (L2F) protocol. Generally speaking, a tunnel protocol enables the creation of a private data stream via a public network by placing one packet inside of another. In the context of a VPN, an IP packet is placed inside another IP packet. In an attempt to develop an industry standard, the Internet Engineering Task Force (IETF) is developing the "Layer 2 Tunneling Protocol" (L2TP), which is a hybrid of the PPTP and L2F protocols (e.g., see K. Hamzeh, T. Kolar, M. Littlewood, G. Singh Pall, J.Taarud, A. J. Valencia, W. Verthein; *Layer Two Tunneling Protocol "L2TP"* ; Internet draft, March, 1998).

For a remote user, a typical form of access to a VPN is via a "plain-old-telephone service" (POTS) connection to an "Internet service provider" (ISP) that provides the VPN service. For example, a user incorporates an analog modem into a personal computer, or equivalent, and has a customer account with a particular ISP, referred to herein as the "home" ISP. (It is also assumed that the user's personal computer is properly configured to support one of the above-mentioned tunneling protocols.) The user accesses the VPN by simply making a data call to the home ISP, e.g., dialing a telephone number associated with the "home" ISP and then "logging in" to the VPN.

As noted above, in L2TP, a tunnel is established between two VPN service providers for carrying a number of calls. Unfortunately, the above-mentioned L2TP protocol does not address "Quality of Service" (QoS) issues (also known as Differential Services). As such, some users may be reluctant to adopt L2TP without QoS assurances such as a guaranteed minimum bandwidth for a call. Consequently, those in the art have suggested modifying L2TP such that after a tunnel is established, a per-call QoS can be negotiated using only a single code point value (e.g., see "Layer Two Tunneling Protocol 'L2TP' IP Differential Services Extension," July 1998, draft-ietf-pppext-12tp-ds-02.txt @ http://www.ietf.org).

**Summary of the Invention**

Unfortunately, providing a per-call QoS using a single code point value is not a complete solution to the problem. In particular, having such a per-call QoS requires use of a predefined fixed data rate in performing call admission control. Further, if the QoS cannot be accommodated by an L2TP peer, the call is denied. Therefore, and in accordance with the principles of the invention, a method and apparatus is provided for first negotiating L2TP tunnels having different QoS requirements.

In an embodiment of the invention, new Attribute Value Pairs (AVP)s are defined for use in the L2TP control messages (as defined in L2TP, AVPs are used to further specify control signaling). These new AVPs support negotiating tunnels given different QoS requirements. Illustratively, a virtual dial-up service is provided via an Internet Service Provider (ISP). A serving ISP negotiates a tunnel to a network server, which provides access to, e.g., a private intranet. As a result, a virtual private network (VPN) service is provided that enables remote access, via a tunnel — supporting a particular QoS — to a private network.

The new AVPs include traffic parameters that allow tunnels to have different delay, packet loss, and bandwidth guarantees to be set up between two peers. As such, these AVPs support data sessions with different delay requirements, etc. In addition, additional bits, such as promotable/demotable bits, are defined that allow one endpoint to increase or decrease the QoS of a tunnel under certain conditions. As such, if the initial QoS cannot be accommodated by an L2TP peer, that peer may be able to accommodate a lower, or higher QoS without having to reject the call.

In accordance with a feature of the invention, illustrative admission control procedures are described for accepting or rejecting incoming/outgoing calls with different quality of service requirements using the negotiated tunnels.

## Brief Description of the Drawing

FIG. 1 shows a communications system in accordance with the principles of the invention;
FIGs. 2 - 3 show flow charts of illustrative methods for use in the communications system of FIG. 1;
FIG. 4 illustrates a control message transaction for negotiating a tunnel in accordance with the principles of the invention;
FIGs. 5 - 6 illustrate new Attribute Value Pair L2TP messages for use in accordance with the principles of the invention;
FIG. 7 illustrates a new L2TP control message for use in accordance with the principles of the invention;
FIGs. 8 - 9 illustrate other control message transactions in L2TP peer communications in accordance with the principles of the invention;
FIG. 10 shows a flow chart of an illustrative method for use in performing call admission control;
FIG. 11 shows an illustrative high level block diagram of Network Access Server; and
FIG. 12 shows another communications system in accordance with the principles of the invention.

## Detailed Description

The description below is generally broken into two parts. The first part describes negotiating a tunnel with particular QoS. The second part describes call admission control to a set of negotiated tunnels.

### Tunnel Negotiation

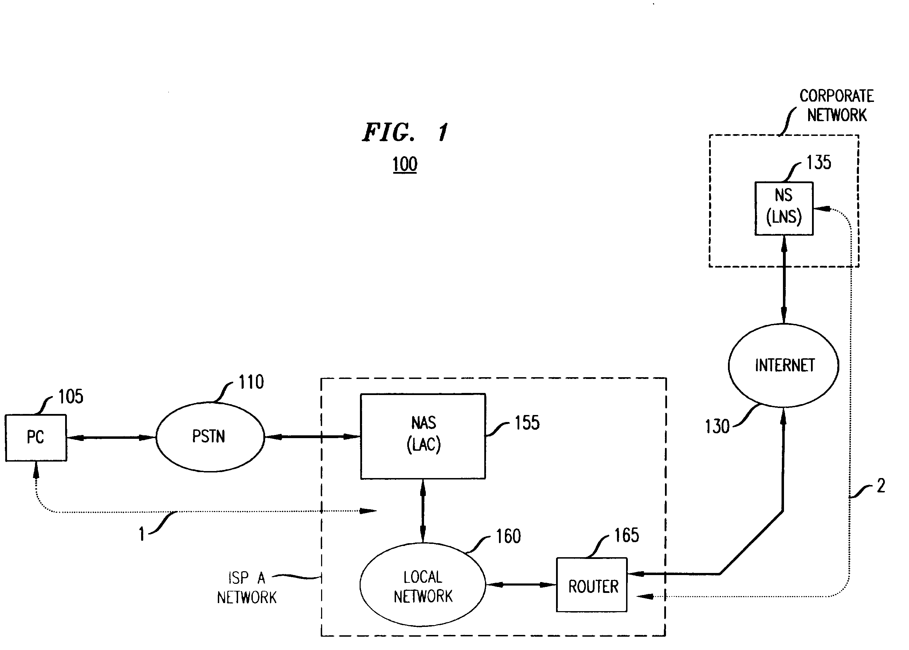

FIG. 1 shows an illustrative communications system 100 in accordance with the principles of the invention. Other than the inventive concept, the elements are well-known and will not be described in detail. For example, personal computer (PC) 110 includes data communications equipment (not shown) for dial-up access through public-switched-network (PSTN) 110 to ISP A for establishing an Internet connection. Likewise, the solid lines between elements of communications system 100 are representative of well-known communications facilities between the respective endpoints, e.g., the connection between PC 110 and PSTN 110 is representative of a local loop connection, the connection between ISP A and Internet 130 is supported by asynchronous transfer mode (ATM) over a synchronous optical network (SONET), etc. Further, its assumed that the reader is familiar with the above-mentioned L2TP protocol, Expedited Forwarding Service and Assured Forwarding Service.

At this point, the following definitions are assumed:

mL2TP - the L2TP protocol as defined in K. Hamzeh, T. Kolar, M. Littlewood, G. Singh Pall, J.Taarud, A. J. Valencia, W. Verthein; *Layer Two Tunneling Protocol " L2TP "* ; Internet draft, March, 1998; *plus modifications as described herein;.*
LAC - mL2TP Access Control, i.e., a Network Access Server (NAS) that supports mL2TP; and
LNS - a Network Server (NS) that supports mL2TP;

(These definitions are used to simplify an illustrative description of the inventive concept. As such, and as those in the art will realize, the inventive concept is not so limited and can be applied to any tunneling protocol and associated processing equipment.)

As can be observed from FIG. 1, communications system 100 comprises ISP A, as represented by ISP A Network. The latter comprises LAC 155 (also referred to as a "serving LAC"), which includes a point-of-presence (POP) router (not shown) as known in the art, a local network 160, and a router 165. It is assumed that ISP A provides a VPN service for remotely located employees to access an illustrative Corporate Network via LNS 135, which provides, among other functions, a routing and firewall capability. (The Corporate network is assumed to be, e.g., a collection of local area networks (not shown) suitably protected behind LNS 135.) In accordance with the inventive concept, and as described further below, a tunnel is negotiated between ISP A Network and LNS 135 for providing a given QoS.

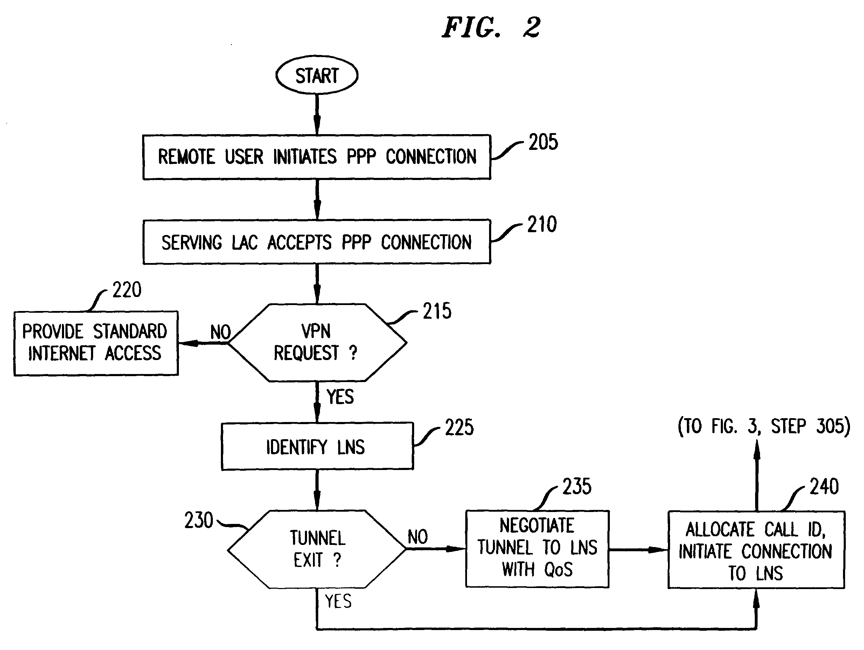

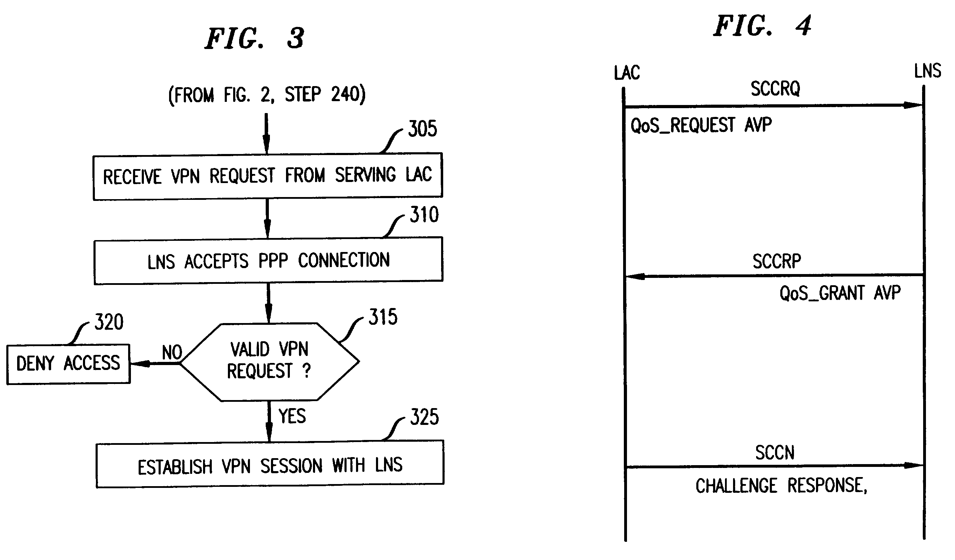

Reference should now be made to FIG. 2, which shows an illustrative high-level flow chart of a method in accordance with the principles of the invention for providing a VPN service to a remote user located at PC 110. (It is presumed that LAC 155 and the other respective servers are suitably programmed to carry out the below-described methods using conventional programming techniques, which, as such, will not be described herein.) In step 205, the remote user initiates a PPP (Point-to-Point Protocol) connection to ISP A via PSTN 110. In step 210, LAC 155 partially authenticates the user (e.g., using a predefined "username" and "password") and accepts the connection (represented by dotted line 1 of FIG. 1). (Alternatively, DNIS (dialed number identification service), CLID (calling line identification), or other equivalent forms of identification could be used.) Obviously, if LAC 155 can not authenticate the user, the connection is not accepted (this step is not shown).

(As background, and as known in the art, when a remote user wishes to establish a new PPP session, PC 110 initiates a PPP LCP (Link Control Protocol) Config Request to the Serving LAC. The Serving LAC completes both the PPP LCP and PPP PAP/CHAP phases, as known in the art, with the user's equipment before initiating any communication with an LNS server in accordance with the inventive concept. (For secure Conduits, the IETF has defined two protocols for security over PPP connections - the Password Authentication Protocol (PAP) and the Challenge-Handshake Authentication Protocol (CHAP) (e.g., see IETF Request for Comment (RFC) 1334, *" PPP Authentication Protocols"* ).)

In step 215, LAC 155 determines if the remote user desires to use a VPN service. (This selection could, e.g., be directly associated with particular "usernames" and/or be associated with a separate request from the user, e.g., via a pop-up "HyperText Transport Protocol" (http) form provided by LAC 155.) If the remote user does not request a virtual dial-up service, LAC 155 provides standard Internet access in step 220. However, if the remote user desires to use a VPN, then LAC 155 identifies an associated LNS in step 225 (described below).

LAC 155 stores a VPN table that a *priori* associates, e.g., a user's identification with a particular LNS. A portion of such a table is shown below in Table One. In this example, the remote user associated with PC 110 is associated with LNS 135, having an Internet Protocol (IP) address illustratively represented by the nomenclature "g.h.i.j."

Table One

| User Identification | LNS |
|---------------------|-------|
| Username | g.h.i.j |

(Alternatively, it should be noted that equivalent structures, or operations, could be used. For example, the Serving LAC may also perform this function via Radius Access Request/Response messages with a Home Radius Server.)

In step 230, LAC 155 checks to see if a tunnel exists between itself and LNS 135. As such, LAC 155 maintains a table, as illustrated in Table Two, below, of current tunnels, represented by a tunnel identification (Tid) value, associated call identifiers (Cid) of calls currently using that tunnel, and the associated LNS IP address.

Table Two

| Tid | Cid | LNS IP Address |
|-----|-----|----------------|
| 2 | 5 | g.h.i.j |

If no tunnel connection currently exists between the LAC 155 and LNS 135, then a tunnel is negotiated in step 235 in accordance with the inventive concept (described below). Once a tunnel exists between the LAC 155 and LNS 135, LAC 155, in step 240, LAC 155 performs call admission control (described below) and, if the call is accepted, allocates a new *Cid*, updates Table Two, and initiates a session with LNS 135 by forwarding a VPN request to LNS 135 via local network 160, router 165, and Internet 130. In this request, LAC 155 conveys user identification information to LNS 135. (If the call not accepted, the incoming call is disconnected.)

Turning now to FIG. 3, LNS 135 receives the request in step 305. In step 310, LNS 135 accepts the PPP connection (at least for the moment). In step 315, LNS 135 performs authentication of the remote user (e.g., using a predefined "username" and "password" as noted above). (Alternatively, like the Serving LAC, DNIS, CLID, or other equivalent forms of identification could be used.) If LNS 135 can not authenticate the user, the connection is not accepted and LNS 135 denies the request in step 320. (In this case, LAC 155 similarly must convey an error message back to the remote user (not shown).) Conversely, if LNS 135 authenticates the user, LNS 135 accepts the connection (represented by dotted line 2 of FIG. 1) and establishes the VPN session in step 330.

Other than the inventive concept, the VPN session with LNS 135 is established as in the prior art. Illustratively, it is assumed that the Serving LAC maintains the following connection table for each direction of communication for each established VPN session with a remote user:

Table Three

| Connection # | Serving LAC IP Address | LNS | | LNS IP Address | User Assigned IP Address |
|---|---|---|---|---|---|
| | | Tid | Cid | | |
| 5 | d.e.f.g | 1 | 3 | g.h.i.j | a.b.c.d |

This table lists, by connection number, the Serving LAC IP Address, the associated LNS IP Address (with associated tunnel ID and Call ID values for that associated hop), and the user assigned IP address for this call. As such, in establishing a new VPN session LAC 155 allocates a new *Cid* and updates Table Three (e.g., adds a new connection).

At this point, the connectivity is a point-to-point PPP session whose endpoints are the remote user's networking application on one end (as represented by PC 110) and the termination of this connectivity into LNS 135 PPP support on the other. (It should be noted that accounting, if necessary, can be performed at the Serving LAC, as well as the LNS, i.e., each element may count packets, octets and connection start and stop times.)

In support of the above-described virtual dial up service, and in accordance with the inventive concept, a form of the L2TP (mL2TP) protocol is used and described further below. As in L2TP, there are two parallel components of mL2TP operating over a given tunnel: control messages between each LAC-LNS pair, and payload packets between the same LAC-LNS pair. The latter are used to transport mL2TP encapsulated PPP packets for user sessions between the LAC-LNS pair. As in L2TP, the *Nr* (Next Received) and *Ns* (Next Sent) fields are always present in control messages and are optionally present in payload packets. The control messages and payload messages use different sequence number states. For the above-mentioned LAC/LNS pair scenario, there are no changes to the L2TP draft protocol definition as far as the maintenance and usage of (*Nr, Ns*) is concerned.

As noted above, and in accordance with the inventive concept, before PPP tunneling can occur between the Serving LAC and the LNS, a tunnel is negotiated as shown in step 235 of FIG. 2 to provide a particular QoS. During this negotiation, mL2TP control messages are exchanged between the Serving LAC and the LNS. As such, new Attribute Value Pairs (AVP)s (described below) are defined for use in the L2TP control messages (hence becoming mL2TP control messages) for enabling two mL2TP peers to set up, or negotiate, tunnels with different quality of service requirements. As such, it should be realized that — other than the additional QoS negotiation for establishing a tunnel — L2TP tunnel set up procedures are unchanged.

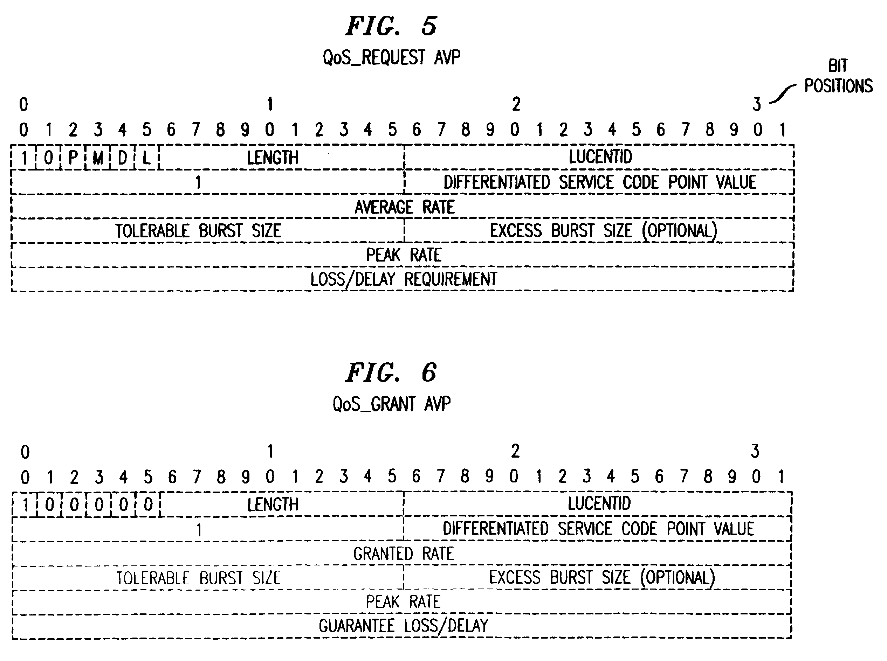

An illustrative control message transaction for performing tunnel negotiation is shown in FIG. 4 between two mL2TP peers (here represented by an LAC and an LNS). (Again, other than the inclusion of the new AVPs, these control message transactions are specified in L2TP.) As can be observed from FIG. 4, the LAC (in this context, also referred to herein as the "tunnel initiator") transmits a Start Control Connection Request (SCCRQ) message that now includes a QoS_Req AVP (described below) to the LNS (in this context, also referred to herein as the "tunnel terminator"). In response, the LNS sends a Start Control Connection Reply (SCCRP) message that now includes a QoS_Grant AVP (described below) to the LAC. The LAC confirms with a Start-Control-Connection-Connect (SCCCN) message to the LNS.

Turning to FIG. 5, an illustrative format of a QoS_Req AVP is shown. The first two bits of this AVP have a predefined bit pattern of "10" (as defined L2TP), bit positions, 2 through 5, convey values for new parameters P, M, D, and L, where P is representative of a promotable bit, M is representative of a demotable bit, D is representative of a delay class bit, and L is representative of a Loss class. The D bit is used if the requested tunnel will support delay classes only. In other words, if the D bit is set in an SSCRQ message, only the delay bits of the differentiated code point value are taken into consideration (described below). Similarly, the L bit is used if the requested tunnel will support loss classes only, i.e., if the L bit is set in a tunnel set up message (SSCRQ), only the loss bits of the code point are taken into consideration. The P and M bits are used on a per-call basis and ignored during tunnel negotiation. When the P and M bits represent a zero value, the mL2TP peer is indicating that only the chosen differentiated code point value is to be used on IP packets within the session's data channel. When the P bit is set, it means that the mL2TP peer can recommend a differentiated service code point value with a higher level of service if the requested one is not available for a call. When the M bit is set, it means that the mL2TP peer can recommend a differentiated service code point value with a lower level of service should the requested one not be available for a call. As such, differentiated services can be offered by ISPs. For example, a user can buy a service where he pays $y$ dollars for delay priority class 1 and $x$ dollars for delay priority class 2 ($\$y > \$x$). Every time the user places a call, the mL2TP peer determines if there are sufficient resources within a tunnel providing delay priority class 2 to admit the user's request. If there are insufficient resources, the mL2TP peer can promote the code point to the next higher level (i.e. try to see if there are sufficient resources to place the user's request in another tunnel providing delay priority class 1).

Following the P, M, D, and L bits is a ten bit length field, the value for which is the size of this AVP. After the length field, there is a two byte Vendor specific ID (here illustratively shown as conveying the data representative of a Lucent identifier (Lucentid) and denoting that this is a tunnel QoS message). (Alternatively, this could be replaced by a predefined mL2TP AVP code signifying that this is a tunnel QoS message.) The Vendor specific ID is followed by a two byte L2TP attribute type field, here set to 1. After the attribute type field, there is a differentiated services code point value (two bytes in length), which is used by the mL2TP peer (here the LNS) to indicate that it wishes to set up a tunnel supporting a particular class of differentiated service.

The values of the differentiated service code point values are defined in a fashion similar to the definition of codepoints in the above-mentioned Assured Forwarding (AF) Service. In particular, the two mL2TP peers may set up classes of tunnels $A_{if}$, where represents a type of delay class and $j$ represents a type of loss class. For the purposes of example only, $i = 1, 2, 3, 4$; and $j = 1, 2, 3$. As such, there are 4 classes of tunnels each supporting a different delay priority class, i.e., with differentiated service code points $Aix, I = 1, 2, 3, 4,$ as shown in the table, below.

| Aix | Differentiated Service Code Point Value |
|-----|------------------------------------------|
| A1x | 00000000-001XXX00 |
| A2x | 00000000-010XXX00 |
| A3x | 00000000-011XXX00 |
| A4x | 00000000-100XXX00 |

*Delay Priority Classes*

The "X" represents a "don't care" condition, i.e., the value can be a binary zero or a binary one. The hyphen between the two bytes is to improve readability only. Individual sessions with differentiated service code points $Aij$ are mapped to a tunnel supporting differentiated service code point $Aix$.

Similarly, the mL2TP peers may set up 3 classes of tunnels each supporting a different loss priority class, i.e., with differentiated service code points $Axj, j = 1, 2, 3.$ Individual sessions with differentiated service code point $Aij$ are mapped to a tunnel supporting differentiated service code point $Axj$, as shown in the table, below.

| Aix | Differentiated Service Code Point Value |
|-----|------------------------------------------|
| Ax1 | 00000000-XXX01000 |
| Ax2 | 00000000-XXX10000 |
| Ax3 | 00000000-XXX11000 |

*Loss Priority Classes*

(Alternatively, the two L2TP peers may set up one tunnel specifically for differentiated service code point *Aij* and admit only individual sessions that request differentiated service code point *Aij*.)

Thus, for AF services, differentiated service code point values such as *001xxx* or *xxx010* are acceptable for the tunnels. For proper traffic engineering, it is required that the two mL2TP peers specify a rate for each tunnel that supports AF services. With such specification, the L2TP peers can decide when to admit/reject data sessions. They can also decide how to share the available resources (bandwidth and buffers) among the different established tunnels.

Similarly, for the earlier-mentioned Expedited Forwarding (EF) service, the QoS_ Req AVP includes the EF Code Point (i.e., the differentiated service code point value), and the requested average rate.

The average rate field, tolerable burst size field, excess burst size field, peak rate field and loss/delay requirement field represent traffic parameters that are used to provide tunnels with quantitative delay/loss guarantees as well as improve call admission probability (increase bandwidth multiplexing). In particular, the average rate field value represents the requested average bits per second for the tunnel. The tolerable burst size field value request represents how long a transmitter may transmit packets at the peak rate. The excess burst size (optional) field value request represents how long a transmitter can exceed the tolerable burst size. The peak field value request represents the requested peak rate, e.g., in bits per second. The loss/delay requirement field value request represents either packet loss (above-mentioned L bit field is set) or delay class (above-mentioned D bit field is set). For packet loss, this value represents the percentage of tolerable packet loss, e.g., 1%, 5%, etc. For delay class, this value represents the tolerable delay, e.g., in milli-seconds.

The above additional traffic parameters are important. For example, if tolerable burst size is not taken into account, then bandwidth management is constrained. As an additional illustration, consider the following, If there is a channel supporting an AF class Aij with bandwidth R and currently supporting a data session with a bandwidth R1, a request for a new data session also asking for AF class Aij with a required bandwidth of R2 results in reducing the remaining available bandwidth (Re) to $Re = R - (R1+R2)$. However, if the two sessions are considered together, then one may need to reserve only Rg, where $Rg \leq (R1 + R2)$ and $Rg > r_1 + r_2$, where $r_1$ and $r_2$ are the average rates for data sessions one and two, respectively.

FIG. 6 shows an illustrative format for a QoS_Grant AVP sent by a tunnel terminator (e.g., LNS 135 of FIG. 1) in the SCCRP message. The fields of the QoS_Grant AVP are complementary to those of the QoS_Request AVP (described above). In this case, there are no PMDL bits, the responding server indicates the "Granted Rate" and the Guarantee Loss/Delay value. The granted rate may be smaller than the requested rate. It should be noted that the tunnel terminator can include in the SCCRP another QoS_Req AVP for reverse traffic if there is such a need. The reply from the tunnel initiator is contained in the QoS_Grant AVP within an SCCCN message.

As more data sessions are admitted, it may be necessary to tune the traffic parameters for existing tunnels. The process of renegotiating traffic parameters for existing tunnels is referred to herein as the tunnel tuning process. In addition, to enjoy better bandwidth multiplexing gain, some pre-configured tunnels may need to be torn down and existing data sessions (supported on such tunnels) moved to another tunnel. This process is referred to herein as tunnel reassignment. Note that ideally, these two processes should happen only rarely. As such, and in accordance with the inventive concept, new L2TP messages are available for re-negotiating, or tuning, an existing tunnel. These new L2TP messages are "tunnel update" and "update confirm." For example, a "tunnel update" message is used by one mL2TP peer to inform the other mL2TP peer of new requested traffic parameters for an existing tunnel. The other mL2TP peer replies using the "update confirm" message. The "tunnel update" and "update confirm" messages use the same format as the QoS-Request and QoS-Grant AVPs, respectively, and, as such, are not shown herein.

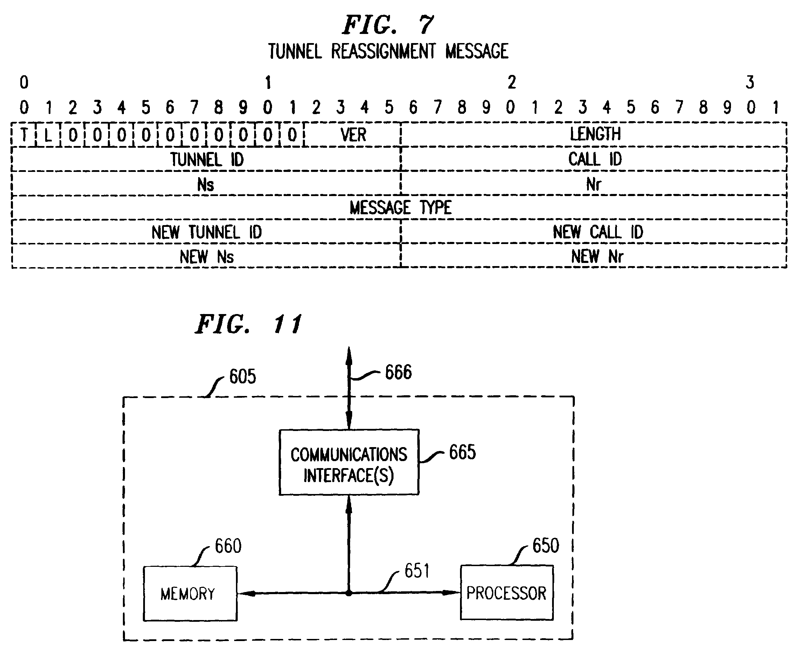

An illustrative format for a new tunnel reassignment message is shown in FIG. 7. Like the "tunnel update" message, a tunnel reassignment message is only used if one chooses to support the tunnel tuning/re-negotiation mechanism. This message is used by one mL2TP peer to inform the other mL2TP peer that a particular data session has been moved to another tunnel. This mL2TP message includes the tunnel id (old or existing), the call id (old or existing), the new tunnel id, and new call id. Bit positions T and L are as defined L2TP.

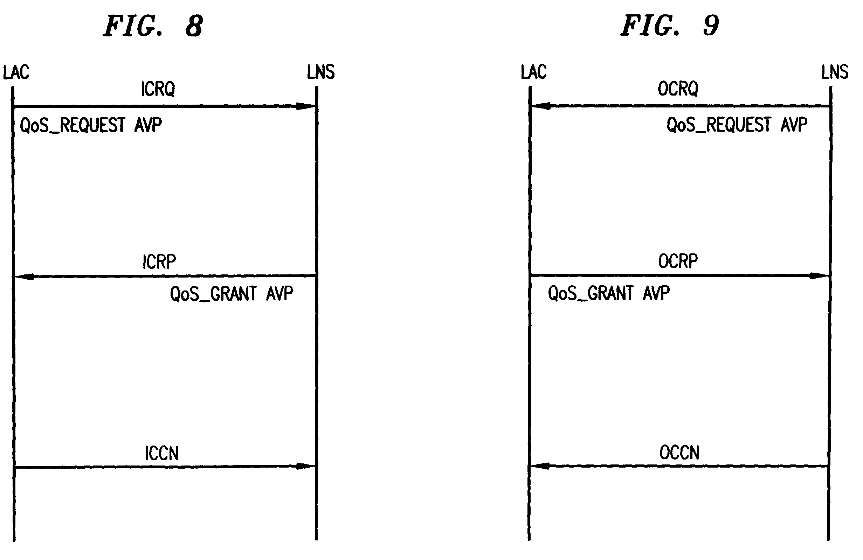

Once a tunnel is set up having a particular QoS, then QoS on a per-call basis (or individual session) needs to be considered. For an individual session, the LAC or LNS receives requests for setting up an incoming from a user or outgoing call to a user. The LAC or LNS determines the relevant traffic parameters and QoS (codepoints) based on the user's a priori defined profile. The LAC or LNS communicates with an Authentication Authorization and Accounting (AAA) server, as known in the art, to obtain such parameters based on user login name. For example, a user may buy a virtual lease line service (with an EF codepoint) of a particular rate. As such, the traffic parameters specified for each individual session, e.g., average rate, tolerable/excess burst sizes, peak rates, etc. are used for admission control purposes. Such information allows different mL2TP peers to keep track of the resources available for a tunnel supporting a particular class of service. Thus, a QoS_ Req AVP exists in the Incoming-Call-Request (ICRQ) or Outgoing-Call-Request (OCRQ) message. An QoS_Grant AVP is then present in the corresponding Incoming-Call-Reply (ICRP) and Outgoing-Call-Reply (OCRP) message. These control message transactions are illustrated in FIGs. 8 and 9. Note further, that if it is desired to have different traffic parameters in the upstream or downstream directions, then a QoS_ Req AVP for the reverse direction may also be present in the ICRP and OCRP messages. If a QoS_ Req AVP is present in the ICRP and OCRP messages, then a QoS_Grant AVP is present in the Incoming-Call-Connected (ICCN) and Outgoing-Call-Connected (OCCN) messages. The presence of a QoS_ Req AVP in the ICRQ or OCRQ indicates that one mL2TP peer wishes to use a specific differentiated service code point for all data packets of a particular data session. If the mL2TP peer cannot accept that code point due to a shortage of resources, that mL2TP peer can recommend an alternative code point if the above-mentioned Promotable/Demotable bits are set. Otherwise, the mL2TP peer rejects the call request. Thus, the value found in the QoS_Grant AVP indicates the value that the mL2TP peer is willing to accept.

*Call Admission*

In this section, a generic call admission control algorithm is proposed for use by mL2TP peers in managing existing tunnel connections (negotiated or not). This generic call admission control algorithm is described in the context of two examples: tunnels with different delay requirements (referred to herein as "delay-based tunnels) and tunnels with different loss requirements (referred to herein as "loss-based tunnels").

With respect to delay-based tunnels, it is assumed that the delay that a tunnel guarantees satisfies the following equation;

$$d = (b + C)/R + D, \tag{1}$$

where $d$ is the delay requested by a new call (or session), $b$ is the burst size, $R$ is the reserved bandwidth for the tunnel, and $C$ and $D$ are parameters defined as follows.

The fluid delay of a flow obeying a traffic description ($r, b$), where $r$ is the average rate and $b$ is the burst size) and being served by a line with bandwidth $R$ is bounded by $b/R$ as long as $R$ is no less than $r$. Given the fact that it is packets that are being modeled, two additional error correction terms are defined: C and D, which describe the maximum deviation away from the fluid model. For example, if the maximum transfer unit (MTU) size is 512 bytes, and the value of $b$ is 1500 bytes, then C is equal to: 3 x 512, or 1500 bytes since an integer number of packets must be processed. Similarly, if an implementation has occasional gaps in service (due to processing other messages), D needs to be large enough to account for the time a datagram may lose during the gap in service (e.g., D is expressed in milliseconds)

For the purposes of this first example, it is assumed that tunnels are ordered in increasing order of the delay they can guarantee (e.g., in a table such as that shown in Table Two, above) and that each tunnel is configured with parameters ($b^T, R^T, C^T, D^T$) where $b^T$ is the tolerable burst size, $R^T$ is the total reserved bandwidth for the tunnel, $C^T$ and $D^T$ are adjustments due to the packet nature and the superscript $T$ is the tunnel id.

Given $N$ tunnels, each with a delay guarantee of $d_i^T$, and a new data session with request ($b, r, p, d$), where $r$ is the average rate, $p$ is the peak rate, and $d$ is the delay requested by a new data session, the following algorithm is used to admit or reject a new data session as well as to determine the appropriate tunnel for carrying traffic from the new data session:

The following definitions are used:

$B_{u,i}$ = the sum of tolerable burst sizes of all admitted sessions for that tunnel;
$R_{u,i}$ = the rate that is required to support a delay of $d_i^T$ for all admitted sessions (or calls),
$R_{o,i}$ = the sum of the average rate of all admitted sessions for that tunnel,

$$\text{i.e., } R_{o,i} = \sum_{k=1}^{n_i} r_k,$$

where $n_i$ is the number of data sessions admitted into that tunnel;

($b, r, p, d$) = delay loss call request vector comprising: $b$ - the tolerable burst size, $r$ - average rate, $p$ - peak rate and $d$ - delay requirement of that data session;

($b, r, p, pl$) = loss probability call request vector comprising: $b$ - tolerable burst size, $r$ - average rate, $p$ - peak rate and $pl$ - loss probability requirement of that data session;

($R^T, B^T, d^T$) = delay loss tunnel usage vector comprising: $R^T$ - total reserved bandwidth for the tunnel, $B^T$ - total tolerable burst size for the tunnel, and $d^T$ - delay requirement for the tunnel; and

($R^T, B^T, PL^T$) = loss probability tunnel usage vector comprising: $R^T$ - total reserved bandwidth for the tunnel, $B^T$ - total tolerable burst size for the tunnel, and $PL^T$ - loss probability requirement of that tunnel session.

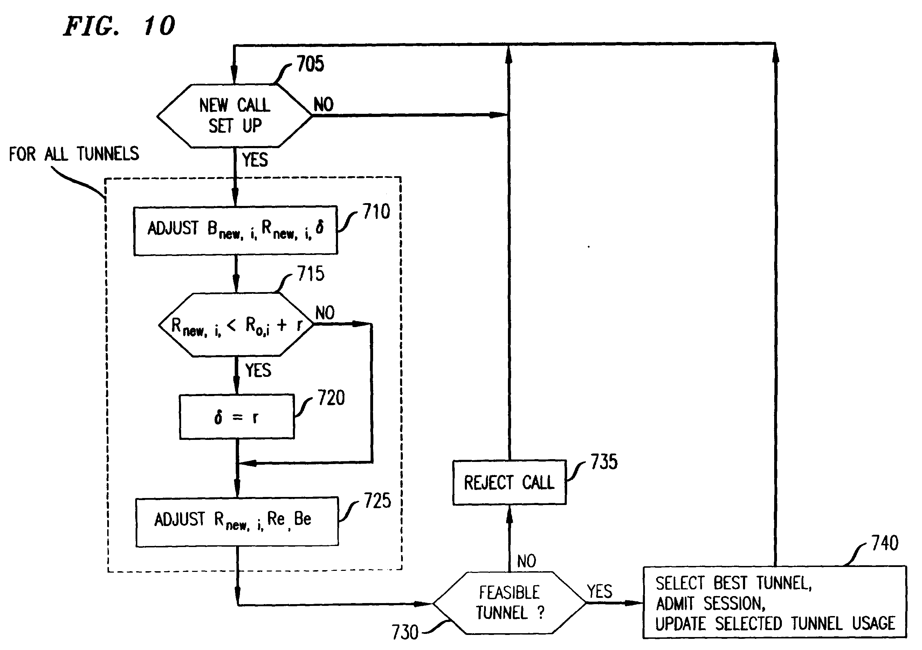

Reference should also be made to FIG. 10, which shows a generic flow chart of as call admission control algorithm. For the purposes of this description it is assumed that LNS 155 of FIG. 1 performs this call admission control algorithm. (However, either the LAC or the LNS can do it.)

Step 705 of FIG. 10 represents the start of the process. Upon a determination in step 705 that a new call needs to be admitted, LNS 155 executes step 710. As noted above, it is assumed that LNS 155 maintains a table of tunnels (which are candidates for the incoming call) arranged in increasing order of delay. For each tunnel, $i$, with $d_i^T$ smaller than $d$, LNS 155 computes in step 710:

$$B_{new,\ i} = B_{u,i} + b, \tag{2}$$

$$R_{new,\ i} = (B_{new,\ i} + C)/(d\text{-}D); \text{ and} \tag{3}$$

$$\delta = R_{new,\ i} - R_{u,i} \tag{4}$$

where $B_{new,\ i}$ is the new required burst size for tunnel $i$, should the new call be admitted, $R_{new,\ i}$ is the bandwidth that is required to support all the sessions should this new data session be admitted, and $\delta$ is the difference between the new and old bandwidths. In step 715, LNS 155 checks if new bandwidth, $R_{new,\ i}$, is smaller than the sum of the average rate for all tunnels, $R_{o,i}$, and $r$. If so, than LNS 155 sets $\delta = r$ in step 720. If not, then LNS 155 proceeds directly to step 725. In step 725, LNS 155 performs the following computations;

$$R_{new,\ i} = R_{u,i}, + \delta, \tag{5}$$

$$Re = R_i^T \text{-} R_{new,\ i}, \text{ and} \tag{6}$$

$$Be = B_i^T - B_{new,i}, \tag{7}$$

where $Re$ is the remaining bandwidth available for the tunnel and $Be$ is the remaining burst size available for the tunnel (e.g., this can be mapped to a function of remaining buffer space).

In step 730, LNC 155 selects a set of "feasible tunnels." That is, those tunnels for which $Re \geq 0$, $B_{new} \leq B_i^T$ and $d_i^T \leq d$. In step 740, LNC 155 picks that tunnel from the set of feasible tunnels that gives the minimum $Re$. If there is more than one such tunnel, LNC 155 picks the tunnel that also gives the smallest $Be$. This approach provides "maximal packing" of calls into a tunnel.

Alternatively, LNC 155 can "minimally pack" calls into a tunnel. In this case, in step 740, LNC 155 picks that tunnel from the set of feasible tunnels that gives the maximum $Re$. If there is more than one such tunnel, LNC 155 picks the tunnel that also gives the largest $Be$.

Similarly, LNC 155 can admit calls into a tunnel in accordance with a "minimum bandwidth" approach. In this case, in step 740, LNC 155 picks that tunnel from the set of feasible tunnels that gives the smallest $\delta$. If there is more than one such tunnel, LNC 155 picks the tunnel that also gives the smallest $Re$.

As noted above, a similar call admission control technique is also presented for loss-based tunnels. This technique is similar to the above-mentioned call admission control technique for delay-based tunnels and uses the generic call admission control algorithm shown in FIG. 10. For the purposes of this description it is assumed that LNS 155 of FIG. 1 performs this call admission control algorithm.

Again, it is assumed that tunnels are ordered in increasing order of the loss probability they can guarantee (e.g., in a table such as that shown in Table Two, above) and that each tunnel is configured with parameters ($b^T$, $R^T$, $PL^T$), where $b^T$ is the tolerable burst size, $R^T$ is the average reserved bandwidth for the tunnel, and $PL^T$ is the loss probability that the tunnel can guarantee.

The following function is defined:

$$R = f(b, r, p, pl), \tag{8}$$

where $f$ is a function that gives the bandwidth that needs to be reserved to ensure a loss probability of $pl$ given a traffic with peak rate $p$, average rate $r$, and burst size $b$. An illustrative function can be found in the article "Capacity Evaluation of a Wireless Internet Access System," by M.C. Chuah, W. Matragi, and S. Dravida, *Proceedings of NetInterOp 98.*

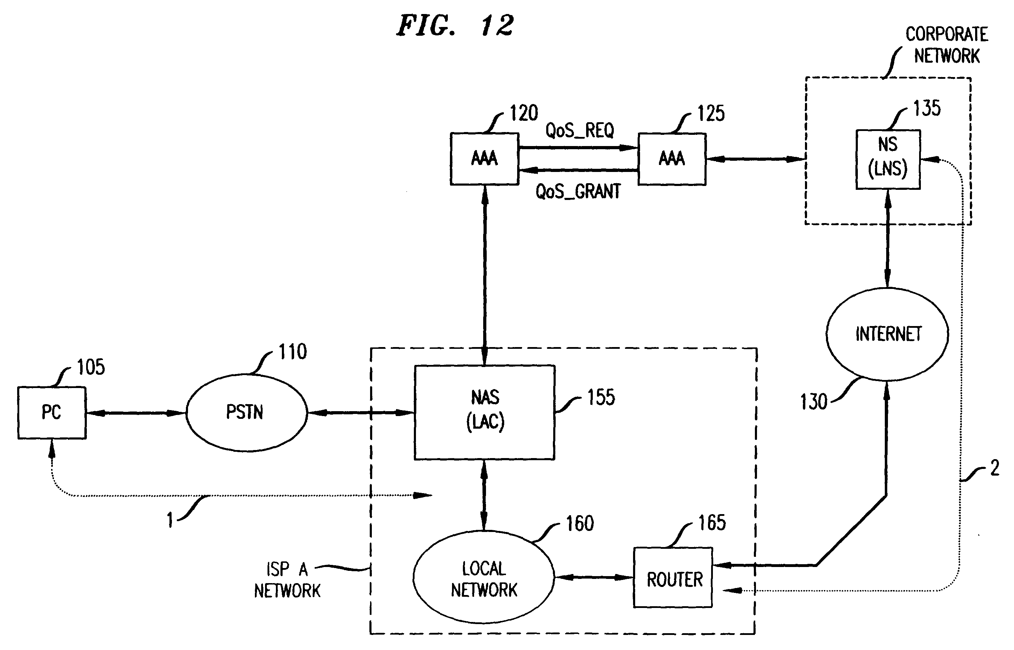

Again, step 705 of FIG. 11 represents the start of the process. Upon a determination in step 705 that a new call needs to be admitted, LNS 155 executes step 710. As noted above, it is assumed that LNS 155 maintains a table of tunnels (which are candidates for the incoming call) arranged in increasing order of the loss probability they can guarantee. For each tunnel, $i$, with $P_i^T$ smaller than $p$, LNS 155 computes in step 710:

$$B_{new,i} = B_{u,i} + b, \tag{9}$$

$$R_{new,i} = (B_{new,i} + C)/(d-D); \text{ and} \tag{10}$$

$$\delta = R_{new,i} - R_{u,i} \tag{11}$$

where $B_{new,i}$ the new required burst size for tunnel $i$, should the new call be admitted, $R_{new,i}$ is the bandwidth that is required to support all the sessions should this new data session be admitted, and $\delta$ is the difference between the new and old bandwidths. In step 715, LNS 155 checks if new bandwidth, $R_{new,i}$, is smaller than the sum of the average rate for all tunnels, $R_{o,i}$, and $r$. If so, than LNS 155 sets $\delta = r$ in step 720. If not, then LNS 155 proceeds directly to step 725. In step 725, LNS 155 performs the following computations:

$$R_{new,i} = R_{u,i} + \delta, \tag{12}$$

$$Re = R_i^T - R_{new,i}, \text{ and} \tag{13}$$

$$Be = B_i^T - B_{new,i}, \tag{14}$$

where $Re$ is the remaining bandwidth available for the tunnel and $Be$ is the remaining burst size available for the tunnel (e.g., this can be mapped to a function of remaining buffer space).

In step 730, LNC 155 selects a set of "feasible tunnels." That is, those tunnels for which $Re \geq 0$, $B_{new} \leq B_i^T$, and $P_i^T \leq pl$. In step 740, LNC 155 picks that tunnel from the set of feasible tunnels that gives the minimum $Re$. If there is more than one such tunnel, LNC 155 picks the tunnel that also gives the smallest $Be$. This approach provides "maximal packing" of calls into a tunnel.

Similarly, LNC 155 can admit calls into a tunnel in accordance with a "minimum bandwidth" approach. In this case, in step 740, LNC 155 picks that tunnel from the set of feasible tunnels that gives the smallest $\delta$. If there is more than one such tunnel, LNC 155 picks the tunnel that also gives the smallest $Re$.

As can be observed from the above, a flexible quality of service extension to L2TP has been described. This approach allows L2TP peers to provide quantitative delay/loss guarantees to end users in a differentiated service architecture. In addition, new call admission control algorithms were described for use by L2TP peers.

Turning briefly to FIG. 11, a high level block diagram of a representative NAS (L2TP peer) is shown in accordance with the principles of the invention. An NAS is a stored-program-control based processor architecture and includes processor 650, memory 660 (for storing program instructions and data, e.g., for communicating the above-mentioned new AVP messages related to QoS, etc.) and communications interface(s) 665 for coupling to one or more communication facilities as represented by path 666.

The foregoing merely illustrates the principles of the invention and it will thus be appreciated that those skilled in the art will be able to devise numerous alternative arrangements which, although not explicitly described herein, embody the principles of the invention and are within its spirit and scope. For example, although the inventive concept was described in the context of a Serving LAC tunneling to an LNS, the inventive concept is applicable to multi-hop tunnels, e.g., such as described in the co-pending and commonly assigned U.S. Patent application of Chuah et al., entitled "A Multi-Hop Point-to-Point Protocol," serial No. 09/074745, filed on May 5, 1998. Further, although the inventive concept was described in terms of L2TP, it should be noted that such QoS negotiations for a tunnel (and subsequent call admission) can equivalently be performed by Authentication Authorization and Accounting (AAA) servers as shown in FIG. 12. The communications system of FIG. 12 is similar to FIG. 1 except that the NAS and the NS each communicate with an AAA server. The corresponding AAA servers then negotiate tunnel QoS using the above-described, suitably modified AVPs.

## Claims

1. A method for use in a packet server, the method comprising the steps of:

    determining that a packet tunnel needs to be established with another packet server; and
    establishing the packet tunnel such that a particular Quality of Service (QoS) for the packet tunnel is negotiated between the packet servers using a Layer Two Tunneling Protocol (L2TP) based protocol.

2. The method of claim 1 wherein the establishing step includes the step of sending, to the other packet server, a QoS request message comprising QoS parameters that represent a requested QoS for the packet tunnel.

3. The method of claim 1 further comprising the step of admitting a call to the established packet tunnel such that the call admission includes the step of sending, to the other packet server, a QoS request message comprising QoS parameters that represent a requested QoS for the call wherein the QoS parameters include a promotable bit that enables the other packet server to recommend a higher QoS for the call than the requested QoS.

4. The method of claim 1 further comprising the step of admitting a call to the established packet tunnel such that the call admission includes the step of sending, to the other packet server, a QoS request message comprising QoS parameters that represent a requested QoS for the call wherein the QoS parameters include a demotable bit that enables the other packet server to recommend a lower QoS for the call than the requested QoS.

5. The method of claim 2 wherein the QoS parameters include: a delay class bit that specifies the packet tunnel will support delay classes only; or a probability of loss bit that specifies the packet tunnel will support loss classes only; or a requested rate field, a tolerable burst size field, an excess burst size field, and a peak rate field; or a loss/delay field that represents either an amount of packet loss or an amount of packet delay for the packet tunnel.

6. The method of claim 2 wherein the QoS request message is a part of a Layer Two Tunneling Protocol (L2TP) Start Control Connection Request (SCCRQ) message.

7. The method of claim 2 wherein the establishing step includes the step of receiving, from the other packet server, a QoS grant message that includes granted QoS parameters that represent a granted QoS for the packet tunnel.

8. The method of claim 7 wherein the QoS parameters include: a granted rate field, a tolerable burst size field, an excess burst size field, and a peak rate field; or a guarantee loss/delay field that represents either an amount of packet loss or an amount of packet delay for the packet tunnel.

9. The method of claim 7 wherein the QoS grant message is a part of a Layer Two Tunneling Protocol (L2TP) Start Control Connection Reply (SCCRP) message.

10. The method of claim 1 further comprising the step of tuning an established tunnel by exchanging tunnel update and update confirm messages, wherein the tuning step changes a previously negotiated tunnel QoS parameter for the established tunnel.

11. The method of claim 1 further comprising the step of re-assigning an established tunnel such that at least one call supported by the established tunnel is moved to a different tunnel.

12. The method of claim 1 further comprising the step of admitting a call to use the established packet tunnel by first negotiating a QoS for the call with the other packet server.

**13.** The method of claim 1 further comprising a call control admission method for use in admitting a new call to the established packet tunnel, the method comprising the steps of:

determining for each established packet tunnel a tunnel usage vector representing a usage of each respective established packet tunnel;

determining for the new call a call request vector;

determining a new bandwidth as a function of as least the tunnel usage vectors and the call request vector;

if the new bandwidth is less than a sum of an average rate for all established packet tunnels and a rate for the new call then selecting a set of feasible tunnels for supporting the new call; and

selecting an established packet tunnel, for supporting the new call, from the set of feasible tunnels as a function of a tunnel select criteria.

**14.** The method of claim 13 wherein the tunnel selection criteria maximally packs calls into a tunnel; or minimally packs calls into a tunnel; or is in accordance with a minimum bandwidth approach.

**15.** The method of claim 1 wherein the packet server communicates Internet Protocol (IP) packets, and the method further comprises the step of providing access, using the established tunnel, to a virtual private network service for use by users that establish point-to-point protocol connections with the packet server.

EP 1 043 869 A2

*FIG. 1*

100

## FIG. 2

START

REMOTE USER INITIATES PPP CONNECTION — 205

SERVING LAC ACCEPTS PPP CONNECTION — 210

220 —
PROVIDE STANDARD INTERNET ACCESS ← NO — VPN REQUEST ? — 215

YES

IDENTIFY LNS — 225

230 — TUNNEL EXIT ? — NO → NEGOTIATE TUNNEL TO LNS WITH QoS — 235 → ALLOCATE CALL ID, INITIATE CONNECTION TO LNS — 240

YES

(TO FIG. 3, STEP 305)

EP 1 043 869 A2

## FIG. 3

(FROM FIG. 2, STEP 240)

⌐305
RECEIVE VPN REQUEST FROM SERVING LAC

⌐310
LNS ACCEPTS PPP CONNECTION

⌐320                    ⌐315
DENY ACCESS ◄──NO── VALID VPN REQUEST ?

YES

⌐325
ESTABLISH VPN SESSION WITH LNS

## FIG. 4

LAC                                    LNS

SCCRQ

QoS_REQUEST AVP

SCCRP

QoS_GRANT AVP

SCCN

CHALLENGE RESPONSE,

EP 1 043 869 A2

## FIG. 5

QoS_REQUEST AVP

BIT POSITIONS

| 0 | | | | | | | | | | 1 | | | | | | | | | | 2 | | | | | | | | | | 3 | |
|---|---|---|---|---|---|---|---|---|---|---|---|---|---|---|---|---|---|---|---|---|---|---|---|---|---|---|---|---|---|---|---|

| 0 1 2 3 4 5 6 7 8 9 0 1 2 3 4 5 6 7 8 9 0 1 2 3 4 5 6 7 8 9 0 1 |
|---|

| 1 | 0 | P | M | D | L | LENGTH | LUCENTID |
|---|---|---|---|---|---|---|---|
| 1 | | | | | | | DIFFERENTIATED SERVICE CODE POINT VALUE |
| AVERAGE RATE | | | | | | | |
| TOLERABLE BURST SIZE | | | | | | EXCESS BURST SIZE (OPTIONAL) | |
| PEAK RATE | | | | | | | |
| LOSS/DELAY REQUIREMENT | | | | | | | |

## FIG. 6

QoS_GRANT AVP

| 0 | | | | | | | | | | 1 | | | | | | | | | | 2 | | | | | | | | | | 3 | |
|---|---|---|---|---|---|---|---|---|---|---|---|---|---|---|---|---|---|---|---|---|---|---|---|---|---|---|---|---|---|---|---|

| 0 1 2 3 4 5 6 7 8 9 0 1 2 3 4 5 6 7 8 9 0 1 2 3 4 5 6 7 8 9 0 1 |
|---|

| 1 | 0 | 0 | 0 | 0 | 0 | LENGTH | LUCENTID |
|---|---|---|---|---|---|---|---|
| 1 | | | | | | | DIFFERENTIATED SERVICE CODE POINT VALUE |
| GRANTED RATE | | | | | | | |
| TOLERABLE BURST SIZE | | | | | | EXCESS BURST SIZE (OPTIONAL) | |
| PEAK RATE | | | | | | | |
| GUARANTEE LOSS/DELAY | | | | | | | |

EP 1 043 869 A2

## FIG. 7
### TUNNEL REASSIGNMENT MESSAGE

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|T|L|0|0|0|0|0|0|0|0|0|0|  VER  |            LENGTH             |
+-+-+-+-+-+-+-+-+-+-+-+-+-+-+-+-+-+-+-+-+-+-+-+-+-+-+-+-+-+-+-+-+
|            TUNNEL ID          |           CALL ID             |
+-+-+-+-+-+-+-+-+-+-+-+-+-+-+-+-+-+-+-+-+-+-+-+-+-+-+-+-+-+-+-+-+
|              Ns               |            Nr                 |
+-+-+-+-+-+-+-+-+-+-+-+-+-+-+-+-+-+-+-+-+-+-+-+-+-+-+-+-+-+-+-+-+
|                        MESSAGE TYPE                           |
+-+-+-+-+-+-+-+-+-+-+-+-+-+-+-+-+-+-+-+-+-+-+-+-+-+-+-+-+-+-+-+-+
|          NEW TUNNEL ID        |          NEW CALL ID          |
+-+-+-+-+-+-+-+-+-+-+-+-+-+-+-+-+-+-+-+-+-+-+-+-+-+-+-+-+-+-+-+-+
|            NEW Ns             |            NEW Nr             |
+-+-+-+-+-+-+-+-+-+-+-+-+-+-+-+-+-+-+-+-+-+-+-+-+-+-+-+-+-+-+-+-+
```

## FIG. 11

COMMUNICATIONS INTERFACE(S) — 665

— 666

— 605

MEMORY — 660

— 651

PROCESSOR — 650

EP 1 043 869 A2

## FIG. 8

LAC                                              LNS

ICRQ

QoS_REQUEST AVP

ICRP

QoS_GRANT AVP

ICCN

## FIG. 9

LAC                                              LNS

OCRQ

QoS_REQUEST AVP

OCRP

QoS_GRANT AVP

OCCN

EP 1 043 869 A2

*FIG. 10*

```
                              ┌─ 705
                    ╱ NEW CALL ╲    NO
                    ╲ SET UP   ╱ ──────────→
FOR ALL TUNNELS          │
                        YES
          ┌────────────────────────────┐
          │         ▼                   │
          │  ┌──────────────────┐ ┌─ 710│
          │  │ ADJUST Bnew, i, Rnew, i, δ │
          │  └──────────────────┘       │
          │         │                   │
          │         ▼          ┌─ 715   │
          │     ╱ Rnew, i < Ro,i + r ╲  NO
          │     ╲              ╱ ──────→│
          │         │                   │
          │        YES                  │
          │         ▼         ┌─ 720    │
          │     ┌────────┐            │
          │     │  δ = r │            │
          │     └────────┘            │
          │         │                   │
          │         ▼◄──────────────────┘
          │  ┌──────────────────┐ ┌─ 725│
          │  │ ADJUST Rnew, i, Re, Be │ │
          │  └──────────────────┘       │
          └────────────────────────────┘
```

- 705 NEW CALL SET UP
- 710 ADJUST $B_{new,\,i}$, $R_{new,\,i}$, $\delta$
- 715 $R_{new,\,i} < R_{o,i} + r$
- 720 $\delta = r$
- 725 ADJUST $R_{new,\,i}$, $R_e$, $B_e$
- 730 FEASIBLE TUNNEL ?
- 735 REJECT CALL
- 740 SELECT BEST TUNNEL, ADMIT SESSION, UPDATE SELECTED TUNNEL USAGE

## FIG. 12